# EUROPÄISCHE PATENTSCHRIFT

(11) **EP 0 513 698 B1**
(45) Veröffentlichungstag und Bekanntmachung des Hinweises auf die Patenterteilung: **09.08.1995**
(21) Anmeldenummer: 92107828.3
(22) Anmeldetag: 09.05.1992
(51) Int. Cl.: F16H 3/08, B60K 17/08

(54) **Wechselgetriebe für Kraftfahrzeuge mit Synchronisation aller Gänge**
Gear change with all gears synchronized
Changement de vitesse avec tous les rapports synchronisés

(30) Priorität: 18.05.1991 DE 4116418
(43) Veröffentlichungstag der Anmeldung: 19.11.1992
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Hofmann, Harald, W-5000 Köln 71 (DE)
(74) Vertreter: Messulam, Alec Moses

(56) Entgegenhaltungen:
- EP-A- 0 128 319
- DE-A- 2 842 357
- GB-A- 2 088 972

## Beschreibung

Die Erfindung bezieht sich auf ein Wechselgetriebe für Kraftfahrzeuge mit Synchronisation aller Gänge, der im Oberbegriff des Patentanspruches 1 erläuterten Art.

Aus der EP-A-0 128 319 ist ein Wechselgetriebe für Kraftfahrzeuge mit Synchronisation aller Gänge, der eingangs erwähnten Bauart bekannt.

Bei diesen bekannten Wechselgetriebe für Kraftfahrzeuge sind an der Antriebswelle teils fest und teils lose angeordnete Zahnräder angeordnet, die mit entsprechenden teils lose und teils fest auf der Abtriebswelle angeordneten Zahnrädern in Eingriff stehen. Zwischen im allgemeinen jeweils zwei losen Zahnrädern ist eine Synchroneinheit herkömmlicher Bauart zum wahlweisen Verbinden der benachbarten losen Zahnräder mit ihren entsprechenden Wellen angeordnet.

Das bekannte Wechselgetriebe weist den grundsätzlichen Nachteil auf, daß die Synchroneinheit für den ersten und zweiten Gang auf der Abtriebswelle angeordnet ist, wodurch für die Synchronisierung beim Schalten des 1. und 2. Ganges Synchronkräfte bzw. Synchronzeiten in Kauf genommen werden müssen, die ca. um die jeweilige Übersetzung des 1. oder 2. Ganges höher liegen, als dies bei einer Anordnung der Synchroneinheit auf der Antriebswelle der Fall ist.

Dieser Nachteil wurde bisher durchgängig von der Fachwelt in Kauf genommen, da die in einem Wechselgetriebe für Kraftfahrzeuge üblichen Untersetzungen der einzelnen Gänge und die daraus resultierenden Durchmesser der verschiedenen Zahnradsätze unter Berücksichtigung einer Dimensionierung der Wellen und Zahnräder mit ausreichender Festigkeit eine Anordnung auf der Antriebswelle nicht möglich erscheinen ließen.

Die Aufgabe der Erfindung ist es, ein Wechselgetriebe für Kraftfahrzeuge mit Synchronisation aller Gänge, der im Oberbegriff des Patentanspruches 1 erläuterten Art derart auszubilden, daß die Synchroneinheit für den 1. und 2. Gang auf der Antriebswelle angeordnet werden kann, ohne daß sich hierdurch unlösbare Schwierigkeiten in der Unterbringung der erforderlichen Zahnräder ergeben.

Gemäß der Erfindung wird diese Aufgabe gelöst, indem die Synchroneinheit für den 1. und 2. Gang entsprechend den Merkmalen des Kennzeichenteils des Anspruches 1 angeordnet wird.

Dadurch, daß die Synchroneinheit für den 1. und 2. Gang auf dem dem Eingang der Antriebswelle abliegenden Ende angeordnet wird, kann durch eine stufenweise Abnahme des Durchmessers der Antriebswelle die Möglichkeit für eine Lagerung des losen Zahnrades für den 1. Gang geschaffen werden.

Im Anspruch 2 ist eine weitere Ausführungsform der Erfindung erläutert, die zur Anwendung kommt, wenn der erforderliche Durchmesser für das lose Zahnrad des 1. Ganges noch unterhalb dessen liegt, was bei einer abgestuften Verringerung der Antriebswelle aus Festigkeitsgründen zulässig wäre.

Dadurch, daß das lose Zahnrad für den ersten Gang als eine einerseits im Gehäuse über ein erstes Lager und andererseits im Abschlußdeckel über ein zweites Lager abgestützte Hülse ausgebildet ist, die das freie Ende der Antriebswelle in einer Lageraufnahme über ein Nadellager abgestützt aufnimmt, kann der erforderliche Durchmesser des Zahnrades für den 1. Gang unabhängig vom erforderlichen Durchmesser der Lagerung für das freie Ende der Antriebswelle ausgeführt werden.

Im Anspruch 3 ist auf eine weitere zweckmäßige Maßnahme hingewiesen, wodurch zu hohe Relativdrehzahlen zwischen dem losen Zahnrad 14' für den 1. Gang und der Antriebswelle 4 vermieden werden können.

Im Anspruch 4 ist auf eine günstige Anordnung der Synchroneinheit für den 5. Gang und den Rückwärtsgang hingewiesen, die an der Abtriebswelle unmittelbar benachbart dem Differential/Achsantrieb angeordnet werden kann, wodurch der erforderliche Platz für das Umkehrrad des Rückwärtsganges in günstiger Weise im vorderen Bereich des Getriebes angeordnet werden kann, wo in radialer Richtung durch die benachbarte Kupplungsglocke mehr Platz zur Verfügung steht.

Die Erfindung wird anhand zweier in den beiliegenden Figuren gezeigter Ausführungsbeispiele näher erläutert. Es zeigt:
- Fig. 1: eine geschnittene Getriebeaufrollung durch ein Wechselgetriebe für Kraftfahrzeuge gemäß der Erfindung und
- Fig. 2: einen vertikalen Teilschnitt durch den 1. Gang Zahnradsatz einer weiteren Ausführungsform der Erfindung.

Ein Wechselgetriebe für Kraftfahrzeuge besteht zunächst aus einem Getriebegehäuse 1, einem hinteren Abschlußdeckel 2 und einem vorderen Kupplungs/Differential-Gehäuse 3.

In diesem, aus den drei Bauteilen 1, 2 und 3 gebildeten Gehäuse ist eine Antriebswelle 4, eine Abtriebswelle 5 und ein Differential/Achsantrieb 6 mit Achsantriebswellen 7 und 8 über entsprechende Lageranordnungen, die im einzelnen nicht näher bezeichnet sind, da sie der üblichen Ausführung entsprechen, drehbar gelagert.

Auf der Antriebswelle 4 sind beginnend vom Eingang Zahnräder für den Rückwärtsgang, den 5. Gang, den 4. Gang, den 3. Gang, den 2. Gang und den 1. Gang angeordnet. Die Verzahnung 9 für den Rückwärtsgang ist hierbei unmittelbar aus der Antriebswelle 4 herausgearbeitet, ebenso ein festes Zahnrad 10 für den 5. Gang. Es folgen dann ein loses Zahnrad 11 für den 4. Gang und ein loses Zahnrad 12 für den 3. Gang. Danach folgt ein loses Zahnrad 13 für den 2. Gang und ein loses Zahnrad für den 1. Gang.

Auf der Abtriebswelle 5 sind beginnend vom Ausgang ein loses Zahnrad 15 für den Rückwärtsgang und ein loses Zahnrad 16 für den 5. Gang angeordnet. Feste Zahnräder 17 und 18 für den 4. und 3. Gang sind an der Abtriebswelle 5 ausgebildet während feste Zahnräder 19 und 20 für den 2. und 1. Gang auf der Abtriebswelle 5 drehfest angeordnet sind.

Ergänzend sei noch darauf hingewiesen, daß das Zahnrad 9 für den Rückwärtsgang zunächst mit einem Umkehrzahnrad 29 in Eingriff steht, das auf einer Rückwärtsgangachse 30 drehbar gelagert ist und in Eingriff mit dem losen Zahnrad 15 für den Rückwärtsgang steht. Die im Durchmesser verhältnismäßig großen Zahnräder für den Rückwärtsgang können somit in dem Teil des Gehäuses 1 angeordnet werden, der an dem im Durchmesser erweiteren Kupplungs/ Differential-Gehäuse 3 anschließt.

Zwischen den losen Zahnrädern 13 und 14 ist eine Synchroneinheit 21, zwischen den losen Zahnrädern 11 und 12 ist eine Synchroneinheit 22 und zwischen den losen Zahnrädern 15 und 16 ist eine Synchroneinheit 23 angeordnet.

Der Aufbau einer solchen Synchroneinheit besteht im wesentlichen aus einer Synchronnabe, die mit der entsprechenden Antriebswelle 4 bzw. der Abtriebswelle 5 drehfest verbunden ist und einer entsprechenden axial verschiebbaren Schaltmuffe, die bei einer Verschiebung über Sperrsynchronringe auf Synchronkegel an den losen Zahnrädern einwirken und danach mit entsprechenden Kupplungsverzahnungen an den Zahnrädern in Eingriff kommen kann.

Als Synchroneinheiten 21, 22 und 23 sind alle dem Fachmann bekannten Bauformen anwendbar.

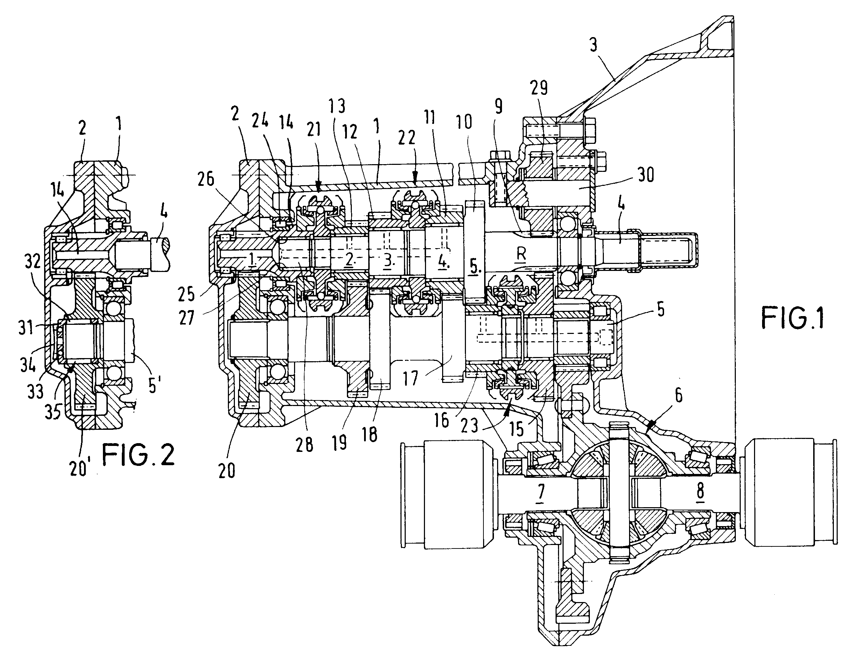

In der Figur 1 ist eine besondere Ausführungsform der Erfindung aufgezeigt, die dann zur Anwendung kommt, wenn der Durchmesser des losen Zahnrades 14 für den 1. Gang geringer ist als das freie Ende der Antriebswelle 4 unter Festigkeitserfordernissen ausgebildet werden kann. Für diesen Fall ist das lose Zahnrad 14 für den 1. Gang als eine einerseits in einem ersten Lager 24 im Gehäuse 1 und andererseits in einem zweiten Lager 25 in Abschlußdeckel 2 abgestützte Hülse ausgebildet, die an ihrem zum Gehäuse 1 liegenden Ende eine Lageraufnahme 26 aufweist, in der das freie Ende 28 der Antriebswelle 4 über ein Nadellager 27 abgestützt ist.

In der Figur 2 ist eine abgewandelte Ausführungsform der Erfindung aufgezeigt, die zu hohe Relativdrehzahlen zwischen dem losen Zahnrad 14 für den 1. Gang und der Antriebswelle 4 verhindert.

Zu diesem Zweck ist ein festes Zahnrad 20' für den 1. Gang nicht über eine Kerbverzahnung direkt mit der Abtriebswelle 5' verbunden, sondern ein schaltbarer Rollenfreilauf 35 einer bekannten, geeigneten Bauart wird zwischen der Abtriebswelle 5' und dem festen Zahnrad 20' für den 1. Gang angeordnet und wird so betätigt, daß er zumindest während eines Betriebes in den oberen Gängen, z.B. in den Gängen 3 bis 5 auf Freilauf geschaltet ist.

Die von einem Käfig 31 geführten Klemmkörper 32 des schaltbaren Rollenfreilaufes 35 sind über ein vom gleichen Käfig 31 geführtes Axialkugellager 33 schaltbar, das über eine Betätigungsvorrichtung 34 axial anpreßbar ist und dadurch die Drehung des Käfigs 31 beeinflußt. Dieser Rollenfreilauf 30 ist Gegenstand einer Patentanmeldung von INA.

## Patentansprüche

1. Wechselgetriebe für Kraftfahrzeuge mit Synchronisation aller Gänge, mit in einem Getriebe/Differential-Gehäuse (1, 2 und 3) gelagerten Antriebs- und Abtriebswellen (4 und 5), einer Rückwärtsgangachse (30) und einem Differential/Achsantrieb (6) mit Achsantriebswellen (7 und 8), wobei an der Antriebswelle (4) teils fest und teils lose angeordnete Zahnräder (9 und 10 bzw. 11, 12, 13 und 14) angeordnet sind, die mit entsprechenden teils lose und teils fest auf der Abtriebswelle (5) angeordneten Zahnräder (15 und 16 bzw. 17, 18, 19 und 20) in Eingriff stehen und wobei zwischen jeweils zwei losen Zahnrädern Synchroneinheiten (21, 22 und 23) angeordnet sind,
**dadurch gekennzeichnet,** daß
- die Synchroneinheit (21) für den 1. und 2. Gang auf dem dem Eingang der Antriebswelle (4) abliegenden Ende angeordnet und dementsprechend die losen Zahnräder (13 und 14) für den 1. und 2. Gang auf der Antriebswelle (4) und die entsprechenden festen Zahnräder (19 und 20) auf der Abtriebswelle (5) angeordnet oder ausgebildet sind.

2. Wechselgetriebe nach Anspruch 1,
**dadurch gekennzeichnet,** daß
- das lose Zahnrad (14) für den 1. Gang als eine einerseits im Gehäuse (1) über ein erstes Lager (24) und andererseits im Abschlußdeckel (2) über ein zweites Lager (25) abgestützte Hülse ausgebildet ist,
- deren zum Gehäuse (1) liegendes Ende eine Lageraufnahme (26) aufweist, in der das freie Ende (28) der Antriebswelle (4) über ein Nadellager (27) abgestützt ist.

3. Wechselgetriebe nach den Ansprüchen 1 und 2,
**dadurch gekennzeichnet,** daß
- das feste Zahnrad (20') für den 1. Gang auf der Abtriebswelle (5') über einen schaltbaren Rollenfreilauf (35) angeordnet ist und dieser so betätigt ist, daß er in den oberen Gängen, z. B. 3. bis 5. Gang, auf Freilauf geschaltet ist.

4. Wechselgetriebe nach den Ansprüchen 1 und 2,
**dadurch gekennzeichnet,** daß
- die Synchroneinheit (23) für den 5. Gang und den Rückwärtsgang auf der Abtriebswelle (5) benachbart dem Differential/Achsantrieb (6) angeordnet ist.

## Claims

1. A change-speed gearbox for motor vehicles with synchronisation of all gears, comprising input and output shafts (4 and 5) journalled in a transmission/differential housing (1, 2 and 3), a reverse gear axle (30) and a differential/final drive (6) with axle drive shafts (7 and 8), the input shaft (4) carrying both fixed and loose gearwheels (9 & 10 and 11, 12, 13 & 14 respectively) that mesh with corresponding loose and fixed gearwheels (15 & 16 and 17, 18, 19 & 20 respectively) on the output shaft (5), and synchroniser units (21, 22 and 23) arranged between respective pairs of loose gearwheels,
characterised in that
- the synchroniser unit (21) for the first gear and the second gear is arranged on the end remote from the input of the input shaft (4) and correspondingly the loose gearwheels (13 and 14) for the first and second gears are arranged on the input shaft (4) and the corresponding fixed gear wheels (19 and 20) arranged or formed on the output shaft (5).

2. A change-speed gearbox according to claim 1,
characterised in that
- the loose gear wheel (14) for the first gear is in the form of a sleeve supported at one end in the housing (1) by way of a first bearing (24) and at the other end in the end cover (2) by way of a second bearing (25),
- the housing (1) end of said sleeve has a bearing seat (26) in which the free end (28) of the input shaft (4) is supported by way of a needle roller bearing (27)

3. A change-speed gearbox according to claim 1 and claim 2, characterised in that
- the fixed gearwheel (20') for the first gear is arranged on the output shaft (5') through a switchable roller-type overrunning clutch (35) which is operated so that is switched to act as a free-wheel in the higher gears, e.g. third to fifth gear.

4. A change-speed gearbox according to claim 1 and claim 2, characterised in that
- the synchroniser unit (2) for the fifth gear and the reverse gear is arranged on the output shaft (5) adjoining the differential/final drive (6).

## Revendications

1. Boîte de vitesses pour véhicules automobiles, dotée d'une synchronisation de tous les rapports et comprenant des arbres menant et mené (4 et 5) montés dans un carter (1, 2 et 3) de boîte/différentiel, un axe (30) de marche arrière et un entraînement (6) d'essieu/différentiel présentant des arbres (7 et 8) d'entraînement d'essieu ; boîte dans laquelle des roues dentées (9 et 10, respectivement 11, 12, 13 et 14), à montage en partie fixe et en partie libre sur l'arbre menant (4), sont en prise avec des roues dentées correspondantes (15 et 16, respectivement 17, 18, 19 et 20) à montage en partie libre et en partie fixe sur l'arbre mené (5) ; et dans laquelle des dispositifs de synchronisation (21, 22 et 23) sont interposés entre deux roues dentées respectives à montage libre,
caractérisée par le fait que
- le dispositif de synchranisation (21) associé aux première et deuxième vitesses est installé sur l'extrémité éloignée de l'entrée de l'arbre menant (4) et, en conséquence, les roues dentées (13 et 14) à montage libre, affectées aux première et deuxième vitesses, sont calées ou ménagées sur l'arbre menant (4), les roues dentées correspondantes (19 et 20) à montage fixe étant calées ou ménagées sur l'arbre mené (5).

2. Boîte de vitesses selon la revendication 1,
caractérisée par le fait que
- la roue dentée (14) à montage libre, affectée à la première vitesse, est réalisée sous la forme d'une douille prenant appui d'une part dans le carter (1), par l'intermédiaire d'un premier palier (24), et d'autre part dans le couvercle obturateur (2), par l'intermédiaire d'un second palier (25),
- douille dont l'extrémité située côté carter (1) présente un logement de portée (26), dans lequel l'extrémité libre (28) de l'arbre menant (4) est en appui par l'intermédiaire d'un palier (27) à aiguilles.

3. Boîte de vitesses selon les revendications 1 et 2,
caractérisée par le fait que
- la roue dentée (20') à montage fixe, affectée à la première vitesse, est calée sur l'arbre mené (5') par l'intermédiaire d'un accouplement libre commutable (35) à rouleaux, lequel est actionné de manière à être commuté sur la course libre dans les rapports supérieurs, par exemple les troisième à cinquième vitesses.

4. Boîte de vitesses selon les revendications 1 et 2,
caractérisée par le fait que
- le dispositif de synchronisation (23) destine à la cinquième vitesse et à la marche arrière est installé, sur l'arbre mené (5), au voisinage de l'entraînement (6) d'essieu/différentiel.
